# EUROPÄISCHE PATENTANMELDUNG

(11) **EP 2 407 068 A1**
(43) Veröffentlichungstag der Anmeldung: **18.01.2012**
(21) Anmeldenummer: 10169533.6
(22) Anmeldetag: 14.07.2010
(51) Int. Cl.: A47J 31/44, A47J 31/60

(54) **Kaffeemaschine**

(71) Anmelder: Koninklijke Philips Electronics N.V., 5621 BA Eindhoven (NL)
(72) Erfinder: Die Erfindernennung liegt noch nicht vor
(74) Vertreter: Damen, Daniel Martijn

(57) **Zusammenfassung**

Die Kaffeemaschine (1) umfasst einen Korpus (3), in dem eine Brühgruppe zur Erzeugung von Kaffee gelagert ist, und einen Kaffeespender (9), der vom Korpus der Maschine gehalten wird und mit mindestens einer Düse zur Abgabe von Kaffee (9A) ausgestattet ist. Die Maschine ist mit einer Dampfzufuhrleitung (31) ausgestattet, die mit einem Milchbehälter (17) verbunden werden kann. Die Dampfzufuhrleitung (31) ist in Verbindung mit einem Aufschäumer (27), der vom Kaffeespender (9) gehalten wird, und der Aufschäumer umfasst einen Anschluss (59) für die Verbindung mit einem Milchzufuhrrohr (25), das vom Milchbehälter (17) gehalten wird.

## Beschreibung

### TECHNISCHER BEREICH

Die vorliegende Erfindung betrifft eine Kaffeemaschine, im Besonderen eine Kaffeemaschine mit Vorrichtungen zur Erzeugung von aufgeschäumter Milch, zum Beispiel für die Zubereitung von Getränken wie Cappuccino, Latte macchiato oder ähnlichen Zubereitungen.

### STAND DER TECHNIK

In der Patentschrift W02010/044116 ist eine Kaffeemaschine beschrieben, die einen Korpus umfasst, in dessen Innerem eine Brühgruppe für die Zubereitung von Kaffee untergebracht ist, einen Kaffeespender mit mindestens einer Düse zur Abgabe von Kaffee, der von der Brühgruppe erzeugt wurde, und eine Dampfzuleitung. An die Maschine ist ein Milchbehälter anschließbar, in dessen Deckel ein Aufschäumer angebracht ist. Der Aufschäumer wird an die Dampfzufuhrleitung angeschlossen, um warme Milch oder aufgeschäumte Milch vom Behälter in eine Tasse, die unter den Kaffeespender gestellt wird, abgeben zu können.

### ZUSAMMENFASSUNG DER ERFINDUNG

Die vorliegende Erfindung betrifft Verbesserungen an Maschinen von der oben erwähnten Art. Genauer gesagt, ist gemäß der Erfindung vorgesehen, dass die Dampfzufuhrleitung an einen Aufschäumer angeschlossen wird, der vom Kaffeespender gehalten wird und daher an der Maschine befestigt ist, während der Milchbehälter ein Rohr für die Milchzufuhr umfasst, das an den Aufschäumer durch einen fest mit dem Aufschäumer selbst verbundenen und daher am Kaffeespender befestigten oder vom Kaffeespender gehaltenen Anschluss angeschlossen werden kann.

Weitere vorteilhafte Merkmale der Erfindung sind in den beiliegenden abhängigen Ansprüchen dargestellt.

Bei einigen Ausführungsformen wird das Rohr für die Milchzufuhr vom Deckel des Behälters gehalten und kann auf diese Weise bequem aus dem Inneren des Behälters enfemt werden, wodurch die Reinigung erleichtert wird..

Gemäß einer besonders vorteilhaften Ausführungsform der Erfindung umfasst das Rohr für die Milchzufuhr ein Verbindungsendstück, damit es dicht schließend mit dem Anschluss des Aufschäumers verbunden werden kann. Auf diese Weise kann das Rohr für die Milchfuhr aus biegsamem Material hergestellt sein, beispielsweise aus lebensmittelechtem Silikongummi, und erstreckt sich vom Behälterdeckel bis zum Behälterboden, wobei ein Ende davon in der Höhe des Verbindungsendstücks am Deckel befestigt ist, das vorzugsweise aus einem steiferen Material erzeugt ist.

Vorzugsweise sind der Deckel, das Verbindungsendstück und der Schlauch voneinander abtrennbar oder zumindest der Schlauch und das Verbindungsendstück sind vom Deckel abtrennbar, sodass eine einfachere und gründlichere Reinigung der Teile möglich ist, die mit Milch in Berührung kommen.

Um aufgeschäumte Milch zu erhalten, umfasst der Aufschäumer einen Durchgang zum Eintritt von Raumluft. Dieser Durchgang kann an ein Elektroventil im Inneren der Maschine angeschlossen werden, das von der Zentraleinheit der Maschine kontrolliert wird, um das Ventil zu öffnen und zu schließen und um daher die Luftzufuhr zu ermöglichen oder zu verhindern, je nachdem, ob der Anwender warme, nicht aufgeschäumte Milch oder warme, aufgeschäumte Milch wünscht. Bei bevorzugten Ausführungsformen der Erfindung ist der Durchgang für den Eintritt der Raumluft auf dem Aufschäumer angebracht, sodass ein Lufteingang direkt außen an der Maschine definiert ist, wodurch es nicht nötig ist zu kontrollieren, ob das Ventil offen oder geschlossen ist. Auf diese Weise erhält man einfachere und leichter handzuhabende Maschinen, obwohl man auf die Möglichkeit verzichtet, warme, nicht aufgeschäumte Milch zu erzeugen, da in diesem Fall der Durchgang für den Eintritt von Raumluft stets geöffnet bleibt. Bei anderen Ausführungsformen kann man manuelle Mittel zum Schließen des Durchgangs für den Lufteintritt vorsehen, sodass dem Anwender ermöglicht wird, zwischen der Erzeugung von warmer, aufgeschäumter Milch oder von warmer, nicht aufgeschäumter Milch zu wählen.

### KURZBESCHREIBUNG DER ZEICHNUNGEN

Die vorliegende Erfindung ist besser verständlich, wenn man der Beschreibung der beiliegenden Zeichnung folgt, welche eine praktische, nicht einschränkende Form der Erfindung zeigt. Genauer gesagt wird in der Zeichnung Folgendes dargestellt:
Fig. 1 zeigt eine Frontalansicht einer erfindungsgemäßen Kaffeemaschine;
Fig. 2 zeigt eine perspektivische Ansicht der Maschine von Fig. 1;
Fig. 3 und 4 zeigen perspektivische Ansichten des Milchbehälters von oben und von unten, der mit dem Aufschäumer verbunden ist, der vom Kaffeespender gehalten wird, wobei vom Spender die Abdeckungen entfernt wurden, um die Innenteile darzustellen;
Fig. 5 zeigt eine Grundrissansicht des Milchspenders, der mit dem Aufschäumer verbunden ist, der vom Kaffeespender gehalten wird;
Fig. 6 zeigt einen Querschnitt entlang VI-VI von Fig. 5; und
Fig. 7 zeigt eine Vergrößerung eines Details von Fig. 6.

### DETAILLIERTE BESCHREIBUNG EINER AUSFÜHRUNGSFORM DER ERFINDUNG

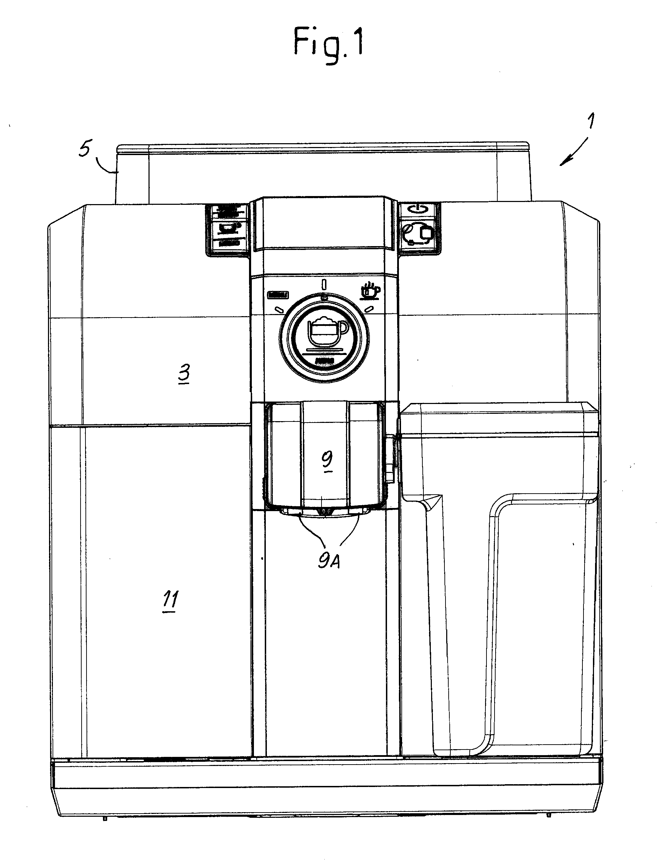

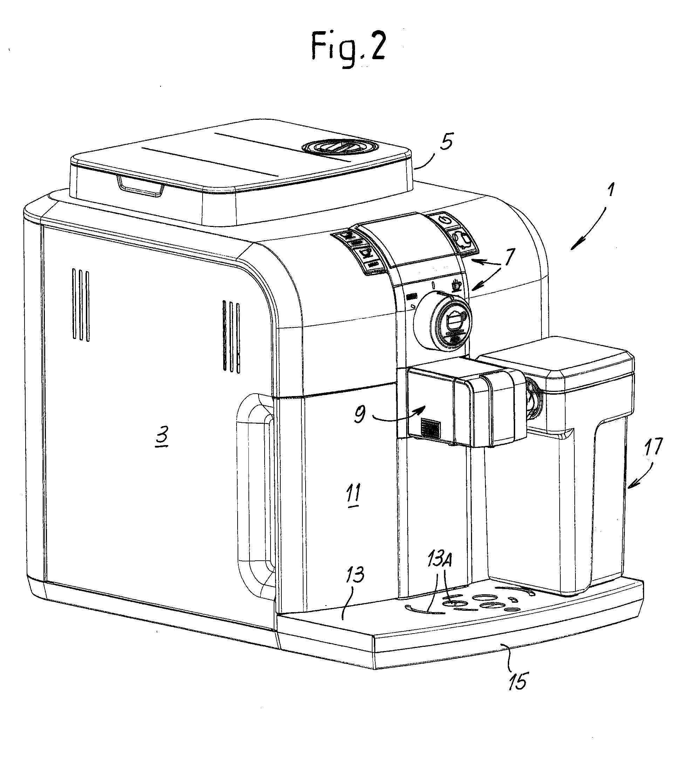

Unter anfänglicher Bezugnahme auf Fig. 1 und 2 weist eine insgesamt mit 1 angegebene Kaffeemaschine einen Korpus 3 auf, in dessen Innerem eine Brühgruppe von an sich bekannter Art zur Erzeugung von Kaffee angebracht ist. Die Brühgruppe kann so ausgeführt sein, dass sie mit losem Kaffeepulver, das aus dem Mahlen von Kaffeebohnen gewonnen wird, oder mit Einzelportionsverpackungen von gemahlenem Kaffee, beispielweise Pads oder Kapseln, befüllt wird. Im dargestellten Beispiel umfasst die Maschine 1 oben auch einen Behälter 5 für Kaffeebohnen und ist daher besonders dafür ausgelegt, die Brühgruppe mit Kaffee zu speisen, der durch das Mahlen der Kaffeebohnen mit der internen Mahlgruppe, die nicht dargestellt ist, erhalten wird.

An der Vorderseite weist die Maschine 1 eine Schnittstelle 7 auf, um in die Maschine Befehle einzugeben und den Fortschritt des Brühvorgangs des gewählten Getränks zu verfolgen. Unterhalb der Schnittstelle 7 umfasst die Maschine einen Kaffeespender 9, der vorteilhafterweise von einer Klappe 11 gehalten wird, welche einen Teil der Vorderwand der Maschine 1 bildet. Der Kaffeespender 9 weist bei dieser Ausführungsform zwei Düsen 9A zur Abgabe des Getränks auf Kaffeebasis auf, das von der internen Brühgruppe der Maschine (nicht dargestellt) erzeugt wird.

Unterhalb der Brühgruppe 9 und der Klappe 11 ist eine Abstellfläche für eine oder zwei Tassen angebracht, in die der Kaffee durch die Spenderdüsen 9A abgegeben wird. Die Abstellfläche kann beispielsweise durch ein Gitter 13 gebildet sein, das Öffnungen 13A zum Ablassen von zurückfließenden Flüssigkeiten in eine darunterliegende Wanne 15 aufweist, die durch das Gitter 13 verschlossen und vorzugsweise mit der Klappe 11 fest verbunden ist.

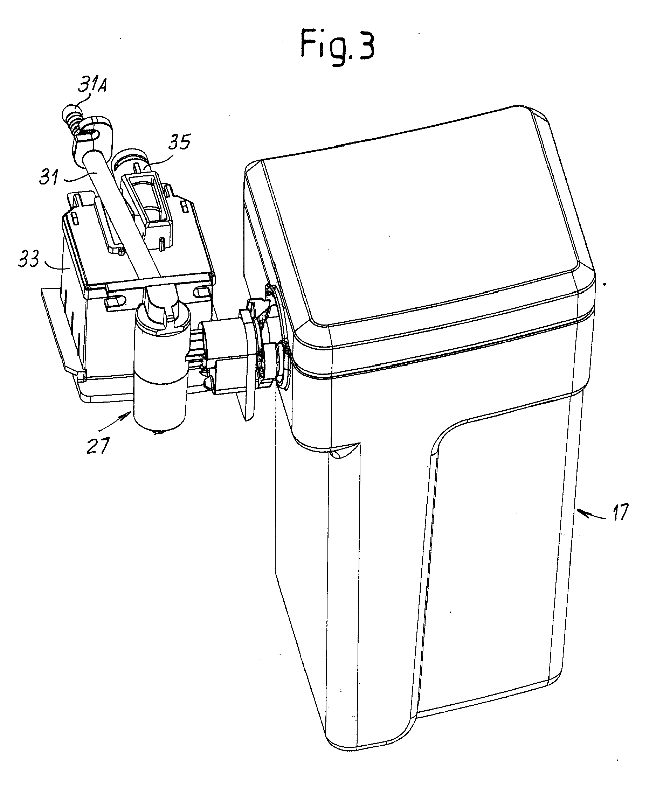

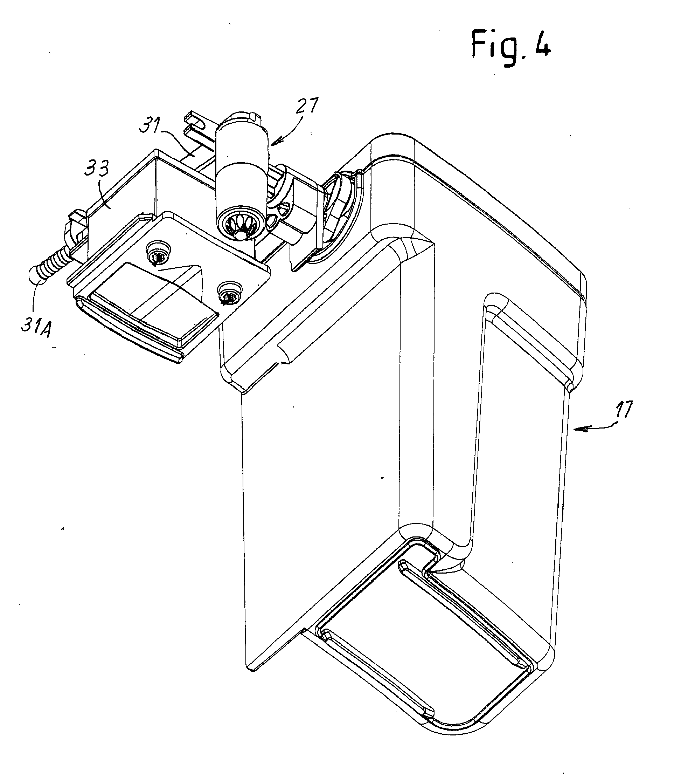

Wie nachfolgend genauer unter Bezugnahme auf die nachstehenden Fig. 3 bis 7 beschrieben wird, ist der Kaffeespender 9 mit einem Aufschäumer zum Aufschäumen von Milch kombiniert, die in einem Behälter 17 enthalten ist, der auf dem Gitter 13 vor der Klappe 11 der Maschine positioniert und mit dem Aufschäumer verbunden werden kann, der vom Kaffeespender 9 gehalten wird. Wie man in der Zeichnung erkennen kann, wird der Behälter 17 oberhalb der Abstellfläche, die durch das Gitter 13 gebildet ist, im Hinblick auf den Kaffeespender 9 an seitlicher Stelle positioniert, da Letzterer einen seitlichen Anschluss aufweist, um den Behälter 17 mit dem Aufschäumer durch eine einfache seitliche Annäherungsbewegung des Behälters 17 an den Kaffeespender 9 zu verbinden.

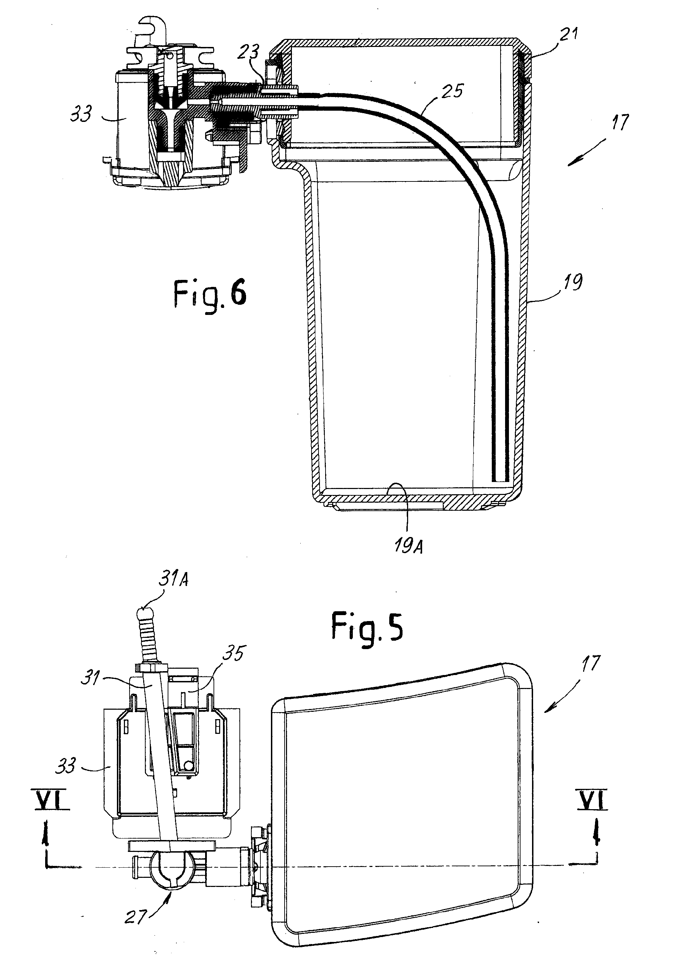

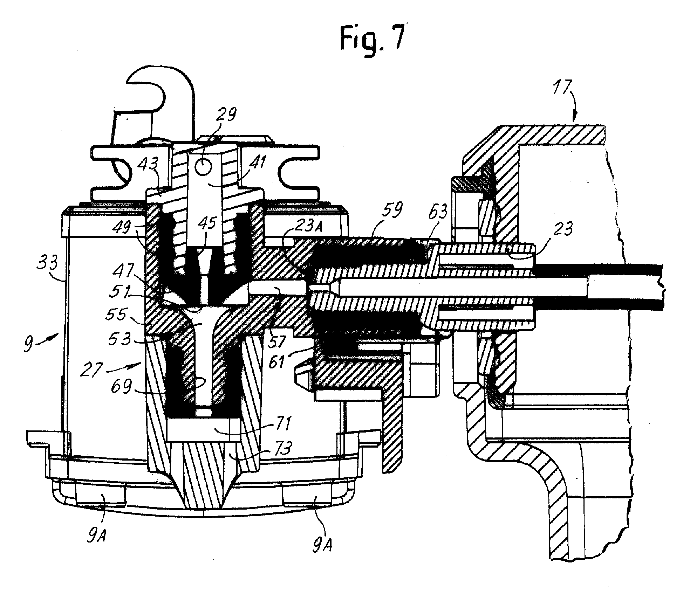

Wie man beispielsweise in Fig. 6 genauer erkennt, weist der Behälter 17 einen Korpus 19 mit einem Boden 19A auf, der mit einem Deckel 21 verschlossen ist. Der Deckel 21 trägt ein Verbindungsendstück 23, mit dem ein Teil des Milchzufuhrrohres 25 aus biegsamem Material, das sich im Inneren des Korpus 19 zu dessen Boden 19A erstreckt, mit dem Aufschäumer verbunden wird, der vom Kaffeespender 9 gehalten und insgesamt mit 27 angegeben ist. Wie im Besonderem im vergrößerten Querschnitt von Fig. 7 zu sehen ist, umfasst der Aufschäumer 27 eine Eingangsöffnung 29 für den Dampf, der von einer Dampfzufuhrleitung 31 mit einem Eintrittsende 31A kommt, das mit einem Dampfzufuhrkreislauf im Inneren der Maschine 1 verbunden werden kann, der nicht dargestellt ist. Der Dampf wird durch einen Kessel oder einen Überhitzer im Inneren der Maschine 1 erzeugt, der ebenfalls nicht dargestellt ist. Die Dampfzufuhrleitung 31 ist vorteilhafterweise an einem Gehäuse 33 befestigt, in dem die Düsen 9A zur Abgabe von Kaffee ausgebildet sind, welche mit der im Inneren der Maschine befindlichen Brühgruppe über einen Anschluss 35 verbunden werden (siehe das Detail in Fig. 3 und 5). Der Komplex des Gehäuses 33, der Dampfzufuhrleitung 31 und des Aufschäumers 27 ist in von einem Kasten umgeschlossen, der in Fig. 1 und 2 sichtbar ist und bei den restlichen Figuren entfernt wurde, um die Beschaffenheit des Aufschäumers 27 und des Kaffeespenders darzustellen.

Die Eingangsöffnung 29 für den Dampf, der durch die Dampfzufuhrleitung 31 zugeführt wird, mündet in eine erste Kammer 41, die in einem Block 43 ausgebildet ist, der Teil des Aufschäumers 27 ist. Die Kammer 41 ist in Fließverbindung mit einem Venturirohr 45, das in einem zweiten Block 47 ausgebildet ist, der mit dem Block 43 verbunden ist, wobei eventuell Dichtungen 49 dazwischen angebracht werden.

Das Venturirohr 45 endet mit einer Düse 51, über die der Dampf in eine Ansaugkammer 53 eingelassen wird, die zwischen dem Block 47 und einem Hauptkorpus 55 des Aufschäumers 27 ausgebildet ist. Die Ansaugkammer 53 ist in Fließverbindung über einen Durchgang 57 mit einem Anschluss 59 des Aufschäumers 27, in den sich das Verbindungsendstück 23 des Milchbehälters 17 einfügt. Eine Dichtung 61 garantiert die Dichtigkeit zwischen dem Anschluss 59 und dem Verbindungsendstück 23. Die Konfiguration der Dichtung 61, des Anschlusses 59 und des Verbindungsendstücks 23 ist so beschaffen, dass sie eine Durchgangsöffnung 63 für den Eintritt von Raumluft zur Ansaugkammer 53 lässt. Zu diesem Zweck weist das Endstück 23 eine Rille 23A auf, die einen engen Durchgang für die Luft bildet, der in den Durchgang 57 mündet, der eine Voraufschäumkammer bildet.

Die Ansaugkammer 53 verlängert sich in eine Leitung 69, die in eine Endkammer 71 mündet, die über Durchgangsöffnungen 73 den Austritt der aufgeschäumten Milch nach unten ermöglicht. Die Durchgangsöffnungen 73 sind vertikal nach unten und ungefähr parallel zu den Düsen 9A zur Abgabe von Kaffee ausgerichtet und bilden einen kleinen Schnabel zur Abgabe von aufgeschäumter Milch. Bei anderen Ausführungsformen kann eine andere Anzahl an Durchgangsöffnungen, eventuell auch nur eine Durchgangsöffnung, zur Abgabe von Milch vorgesehen sein.

Die bis hierher beschriebene Vorrichtung funktioniert auf folgende Weise: Wenn der Anwender eine Tasse Kaffe oder einen Espresso zubereiten möchte, erteilt er der Maschine 1 über die Schnittstelle 7 die notwendigen Instruktionen, welche einzig und allein die interne Brühgruppe aktiviert, um den Kaffee über die Spenderdüsen 9A, 9B abzugeben. In diesem Fall wird kein Dampf erzeugt.

Wenn der Anwender umgekehrt ein Getränk auf Basis von Milch oder von Milch und Kaffee zubereiten möchte, beispielweise Cappuccino oder Latte macchiato, erteilt er der Maschine 1 die entsprechenden Instruktionen, welche einen komplexeren Abgabezyklus durchführt, der die Abgabe von Kaffee über die Spenderdüsen 9A und (vor oder nach der Abgabe von Kaffee) eine Phase zur Abgabe von aufgeschäumter Milch vorsehen kann. Zu diesem Zweck führt die Maschine Dampf mit hoher Temperatur und entsprechendem Druck über die Dampfzufuhrleitung 31 zur Öffnung 29. Der Dampf strömt über das Venturirohr 45 in die Ansaugkammer 53, in der durch die Venturiwirkung dank des Zufuhrdrucks des Dampfes von der Maschine zur Aufschäumgruppe 27 ein niedrigerer Druck als der Raumdruck erzeugt wird.

Der in der Ansaugkammer 53 erzeugte niedrige Druck führt zur Ansaugung der Milch über das Milchzufuhrrohr 25 mit seinem Endstück 23 und gleichzeitig zur Ansaugung von Luft über die Luftdurchgangsöffnung 63 und eine Rille 23A des Endstücks 23. In der Voraufschäumkammer 57 wird die aus dem Behälter 17 angesaugte kalte Milch mit Raumluft aufgeschäumt, die vom Durchgang 63 kommt. Die in die Ansaugkammer 53 angesaugte aufgeschäumte Mischung aus Milch und Luft wird durch den Kontakt mit dem von der Maschine kommenden Dampf auf Temperatur gebracht, der die Verdampfungswärme an die Milch-Luft-Mischung abgibt und kondensiert. Die auf diese Weise aufgeschäumte warme Milch wird über den Durchgang 69 und die Öffnungen 73 in die Tasse abgegeben, die der Anwender auf das Gitter 13 unterhalb des Kaffeespenders 9 gestellt hat.

## Patentansprüche

1. Eine Kaffeemaschine (1), die einen Korpus (3) umfasst, in dem eine Brühgruppe zur Erzeugung von Kaffee untergebracht ist, einen Kaffeespender (9), der vom Korpus gehalten wird und mit mindestens einer Kaffeespenderdüse (9A) ausgestattet ist, eine Dampfzufuhrleitung (31) und einen Milchbehälter (17), der mit der Dampfzufuhrleitung verbunden werden kann, bei dem die Dampfzufuhrleitung (31) in Verbindung mit einem Aufschäumer (27) ist, der vom Kaffeespender (9) gehalten wird, wobei der Aufschäumer einen Anschluss (59) zur Verbindung mit einem Rohr für die Milchzufuhr (25) aufweist, das vom Milchbehälter (17) gehalten wird.

2. Kaffeemaschine laut Anspruch 1, bei der der Milchbehälter (17) einen Korpus (19) und einen Deckel (21) umfasst, wobei das Milchzufuhrror (25) vom Deckel (21) gehalten wird und sich zum Boden (19A) des Korpus (19) erstreckt, wenn der Deckel (21) auf den Korpus (19) aufgesetzt ist.

3. Kaffeemaschine laut Anspruch 1 oder 2, bei der das Milchzufuhrrohr (25) ein Endstück zur Verbindung (23) an den Anschluss (59) des Aufschäumers (27) umfasst.

4. Kaffeemaschine laut einem oder mehreren der vorhergehenden Ansprüche, bei der der Aufschäumer (27) einen Durchgang für den Lufteintritt aufweist.

5. Kaffeemaschine laut Anspruch 3, bei der das Verbindungsendstück (23) mit dem Anschluss (59) des Aufschäumers (27) einen Durchgang für den Eintritt von Raumluft bildet.

6. Kaffeemaschine laut Anspruch 4 oder 5, bei der der Anschluss (59) des Aufschäumers (27) in Fließverbindung mit einer Voraufschäumkammer (57) ist, in der die durch die Wirkung des Durchgangs des unter Druck befindlichen Dampfes durch den Aufschäumer (27) angesaugte Milch sich mit der Raumluft vermischt, die durch den Durchgang zum Lufteintritt angesaugt wird, und bei der die Voraufschäumkammer in Fließverbindung mit einer Ansaugkammer (53) steht, in der ein Unterdruck durch den Durchgang von Dampf entsteht und in die die Mischung aus Luft und Milch angesaugt wird, die sich in der Voraufschäumkammer gebildet hat.

7. Kaffeemaschine laut einem oder mehreren der vorhergehenden Ansprüche, die ein Abstellgitter (13) aufweist, das sich unter dem Kaffeespender (9) zum Abstellen des Milchbehälters (17) und der Tassen zum Auffangen des Kaffees befindet, der vom Kaffeespender (9) abgegeben wird.

8. Kaffeemaschine laut einem oder mehreren der vorhergehenden Ansprüche, bei der der Aufschäumer einen Schnabel (73) für den Austritt der Milch umfasst, der nach unten gerichtet ist, der im Wesentlichen neben der zumindest einen Düse zur Kaffeeabgabe ist.

9. Kaffeemaschine laut einem oder mehreren der vorhergehenden Ansprüche, bei der der Kaffeespender sich von einer Vorderwand (11) der Maschine (1) oberhalb einer Abstellfläche (13) erstreckt und bei der der Anschluss (59) für die Verbindung mit dem Milchzufuhrrohr auf einer Seite des Kaffeespenders (9) angeordnet ist, wobei der Milchbehälter (17) mit dem Aufschäumer verbunden wird, indem er seitlich an den Kaffeespender (9) angenähert wird und sich vor der Vorderwand und auf der Abstellfläche befindet.
